# EUROPEAN PATENT APPLICATION

(11) **EP 4 567 314 A1**
(43) Date of publication of application: **11.06.2025**
(21) Application number: 23215251.2
(22) Date of filing: 08.12.2023
(51) Int. Cl.: F16L 27/10, F16L 27/113, F16L 37/091

(54) **PIPE COUPLING TO CONNECT TWO PIPE ENDS WITH TOLERANCES**

(71) Applicant: Airbus Operations GmbH, 21129 Hamburg (DE)
(72) Inventor: Albers, Frederik, 21129 Hamburg (DE); Hegenbart, Matthias, 21129 Hamburg (DE)

(57) **Abstract**

The present disclosure relates to a pipe coupling having tolerances for a relative movement of pipe ends coupled by the pipe coupling. Particularly, the present disclosure relates to a pipe coupling allowing a linear as well as angular movement of the coupled pipe ends relative to one another by providing an oversized outer clamp assembly.

## Description

The present disclosure generally relates to a pipe coupling allowing tolerances for a relative movement of pipe ends coupled by the pipe coupling. Particularly, the present disclosure relates to a pipe coupling allowing a linear as well as an angular movement of the coupled pipe ends relative to one another by providing an oversized outer clamp.

A conventional pipe coupling configured to couple two pipes to one another is provided with respective pipe receiving sections, where each pipe end is hold in a fixed position. For instance, the pipe ends oppositely abut against a ring-shaped sealing in the centre of a conventional pipe coupling.

In case of a linear extension of one of or both pipes, forces act on the conventional pipe coupling and pipes, and one or both of the pipes may kink or bend. On the other hand, if one of the pipes becomes shorter or it is pulled out of the pipe coupling, the corresponding pipe may become loose in the pipe coupling and/or the pipe may come out of a sealing arrangement in the pipe coupling which, hence, becomes leaky.

It is therefore an object of the present disclosure to provide an improved pipe coupling allowing tolerances for the pipes.

This object is solved by the present invention as defined in the independent claims. Preferred embodiments are defined by the dependent claims.

According to a first aspect to better understand the present disclosure, a pipe coupling comprises a first connector body configured to receive a first pipe end therein and extending in a first longitudinal direction, the first connector body comprising at an outer circumference a seal receiving section, a second connector body configured to receive a second pipe end therein and extending in a second longitudinal direction, and an outer clamp assembly having an inner surface extending in a third longitudinal direction and delimiting an interior space configured to receive the seal receiving section of the first connector body, wherein the outer clamp assembly further has a first and second flange each extending radially inwardly from the inner surface. Thus, the inner surface is arranged outside of the seal receiving section of the first connector body, so that it covers the seal receiving section.

The pipe coupling further comprises a first outer seal arranged partially in the seal receiving section of the first connector body and sealing a space between the first connector body and the outer clamp assembly. In other words, the first outer seal seals a space in fluid communication with an interior lumen of the first pipe end and a space outside of the outer clamp assembly, i.e., outside of the pipe coupling.

Furthermore, the first and second flanges of the outer clamp assembly are spaced apart from one another in the third longitudinal direction by a distance larger than an extent of the seal receiving section of the first connector body in the first longitudinal direction.

Thus, the distance between the first and second flange of the outer clamp assembly allows the seal receiving section to move along the third longitudinal direction. As a mere example, the first outer seal can glide along the inner surface of the outer clamp assembly. Since the first and second flange of the outer clamp assembly face inwardly and the seal receiving section of the first connector body is arranged at the outer circumference thereof, the seal receiving section of the first connector body can abut against the first and/or second flange of the outer clamp assembly. For instance, when viewing along the third longitudinal direction, the first and second flange of the outer clamp assembly can overlap with at least a portion of the seal receiving section of the first connector body. Thus, the first pipe end can move relative to the second pipe end, particularly along the third longitudinal direction. This allows compensating any movement of one of or both pipes relative to one another, particularly compensating a linear movement.

In addition, an inner face (or surface) of the first flange is spaced apart, in a radial direction, from an outer surface of the first connector body arranged adjacent to the seal receiving section of the first connector body. Thus, the first pipe end can perform an angular movement, i.e., the first pipe end and the corresponding first longitudinal direction can be arranged at different angles with respect to the third longitudinal direction. Such angular movement may be a rotation around a point surrounded by the first connector body, such as surrounded by the seal receiving section of the first connector body. Therefore, the first pipe end and the second pipe end can rotate relative to one another, so that an angular movement can be compensated by the pipe coupling.

By the arrangement of the first outer seal at an outer circumference of the first connector body, the inner lumen of the pipe coupling is of at least the same size (e.g., a free cross-section for a fluid running through the pipe coupling) as the inner lumen of the pipe(s). Since the first and second flange of the outer clamp assembly are spaced from one another, there is room for movement of the first connector body and, particularly, for the seal receiving section of the first connector body. Such movement includes a longitudinal movement along or parallel to the third longitudinal direction as well as a bending movement of the first connector body, so that the first longitudinal direction can be parallel to or can coincide with the third longitudinal direction or can form an angle with the third longitudinal direction.

Therefore, the pipe coupling allows for tolerances of the location of the first and second pipe ends with respect to one another. In addition, in case of a thermal extension or shrinking of the first and/or second pipe, such movement can be compensated in the pipe coupling.

In an implementation variant, the second connector body comprises at an outer circumference a seal receiving section. The pipe coupling further comprises a second outer seal arranged partially in the seal receiving section of the second connector body and sealing a space between the second connector body and the outer clamp assembly. Thus, the second connector body can be similar to or even identical to the first connector body but is positioned in the outer clamp assembly in an opposite way, so that both connector bodies can be arranged symmetrically with respect to a symmetry plane arranged in a cross-section of the outer clamp assembly.

The distance between the first and second flange is larger than a sum of the extent of the seal receiving section of the first connector body and an extent of the seal receiving section of the second connector body. Thus, the second connector body can perform a linear movement along or parallel to the third longitudinal direction as it was explained with respect to the first connector body.

Furthermore, an inner surface of the second flange is spaced apart, in a radial direction, from an outer surface of the second connector body arranged adjacent to the seal receiving section of the second connector body. Again, as was explained with respect to the first connector body, the second connector body can perform an angular movement (rotation around a point inside of the second connector body, for example, inside of the seal receiving section of the second connector body).

While the outer clamp assembly as well as the first and second connector bodies can be shaped symmetrically, the clamp assembly and/or the first and second connector bodies can have different shapes or sizes (such as different diameters).

In an implementation variant, the pipe coupling can further comprise a clamp sleeve covering the interior (inner) surface of the outer clamp assembly and forming a sealing surface for the first outer seal and, if present, the second outer seal. As a mere example, the clamp sleeve can be made from a different material than the outer clamp assembly, for example, a material achieving good sealing capabilities with respect to the first outer seal (and/or second outer seal). For instance, the clamp sleeve can be made of a metal or plastic or rubber material.

In an implementation variant, the outer clamp assembly can be mounted to or integrated into the second connector body and extends in the second longitudinal direction, being the third longitudinal direction, away from a section of the second connector body receiving the second pipe end. In other words, an extension of the second connector body forms the outer clamp assembly. This reduces the number of components required and, particularly, avoids the second outer seal, so that a fluid tight coupling can be achieved in a more secure manner.

In an implementation variant, the pipe coupling can further comprise at least one sealing provided at respective inner seal receiving sections of one of the first and second connector body. The respective inner seal receiving sections are arranged to face the first and second pipe ends, respectively, so that the at least one sealing seals a space between an outer surface of the respective pipe end and an inner surface or area of the first and second connector bodies, respectively.

In an implementation variant, the outer clamp assembly can be configured to be widened in a circumferential direction to allow insertion of the seal receiving section of the first connector body. As a mere example, the outer clamp assembly can be made of a flexible material, so that the outer clamp assembly can be imposed over the first connector body and/or the second connector body. In this case, the outer clamp assembly can optionally further comprise a bracket or clip tightening the flexible material around the first and/or second connector body. Alternatively, the outer clamp assembly can include a cut or gap when viewing in a circumferential direction. In this case, the outer clamp assembly further comprises means to close this cut, such as a screw or a bracket or clip.

In any case, when widening the outer clamp assembly in a circumferential direction, it is also widened in a radial direction. This allows widening the first flange (as well as the second flange, if present) to such an extent that the otherwise overlapping seal receiving section of the first (and/or second) connector body can be inserted into the outer clamp assembly and can pass the first (and/or second) flange unhindered.

In an implementation variant, the pipe coupling can further comprise at least one pipe retaining assembly configured to be inserted into one of or both first connector body and the second connector body from an end opposite to the respective seal receiving section. As a mere example, the pipe retaining assembly can be placed over the respective first or second pipe end, the pipe end is then inserted into the first or second connector body, and then the pipe retaining assembly is inserted into the first or second connector body while moving along the outer surface of the first or second pipe.

For instance, the at least one pipe retaining assembly can comprise a claw pinching an outer surface of the respective first or second pipe end. Thus, if a force acting on the respective pipe end (or pipe) that tries to pull the respective pipe out of the first or second connector body, the claw pinches further into the outer surface of the respective first or second pipe end, thereby retaining (fixing) the respective pipe in the first or second connector body.

It is to be understood that the claw pinching an outer surface of the respective first or second pipe end can have a ring shape completely surrounding the pipe end, can have sections of a ring, each of which pinches into the surface of the pipe end, or can be a single claw.

In an implementation variant, the pipe coupling can further comprise an unlocking ring having an inclined front face configured to press the claw out of the pinching engagement with the respective first or second pipe end, when the unlocking ring is moved along the respective first or second longitudinal direction. Thus, the unlocking ring is pushed along the respective pipe into the respective connector body, i.e. in a direction opposite to a pulling force acting on the pipe. When the claw is pressed out of the pinching engagement with the pipe, the pipe can be pulled out of the first or second connector body along the unlocking ring and without being hindered by the claw (that does not pinch into the outer surface of the pipe anymore).

The present disclosure is not restricted to the aspects and variants in the described form and order. Specifically, the description of aspects and variants is not to be understood as a specific limiting grouping of features. It is to be understood that the present disclosure also covers combinations of the aspects and variants. Thus, each variant or optional feature can be combined with any other aspect, variant, optional feature or even combinations thereof.

In the following, the present disclosure will further be described with reference to exemplary implementations illustrated in the figures, in which:
- Figure 1: schematically illustrates an exemplary pipe coupling as well as details thereof;
- Figures 2 and 3: schematically illustrate relative movements of some of the components of the exemplary pipe coupling of Figure 1;
- Figures 4 and 5: schematically illustrate another exemplary pipe coupling and relative movements of the components thereof; and
- Figures 6 and 7: schematically illustrate another exemplary pipe coupling and relative movements of the components thereof, not forming part of the claimed invention.

In the following description, for purposes of explanation and not limitation, specific details are set forth in order to provide a thorough understanding of the present disclosure. It will be apparent to one skilled in the art that the present disclosure may be practiced in other implementations that depart from these specific details.

The Figures of this disclosure show cuts through pipe couplings 100 taken along a longitudinal plane. Each pipe coupling can have a round or circular cross-section taken along a plane perpendicular to the longitudinal direction "L". This shape corresponds to the cross-section of the pipes 300 to be connected, in order to form a fluid tight coupling. The pipes 300 are usually cylindrically shaped, like a hose. It is to be understood that the cross-sectional shape of the pipe couplings 100 as well as the pipes 300 can differ therefrom, such as being an ellipse or even a polygonal form, like a tringle, square, etc..

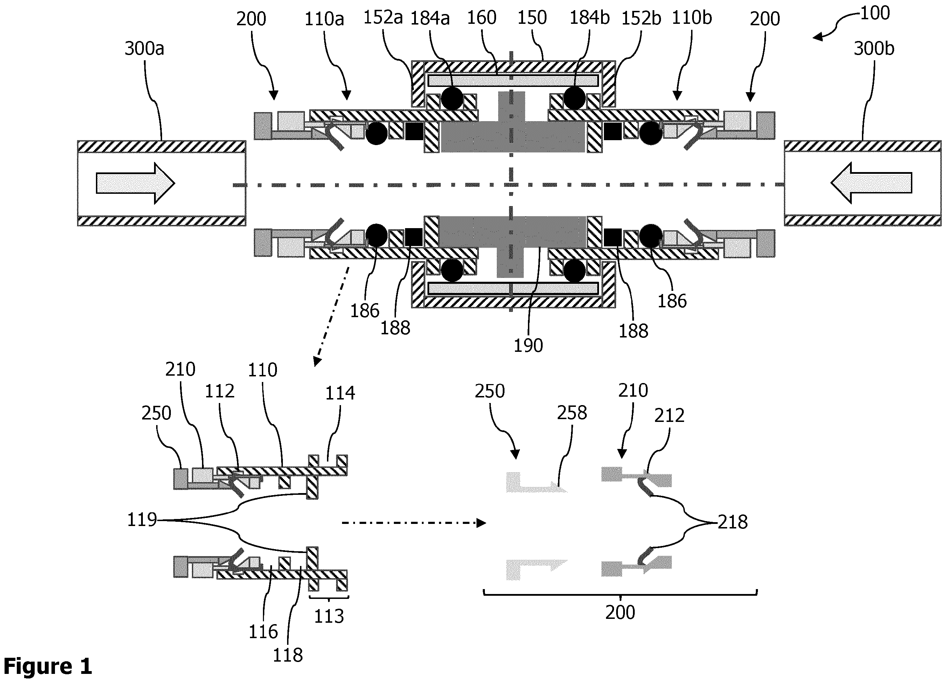

Figure 1 schematically illustrates an exemplary pipe coupling 100 as well as details thereof. Particularly, as indicated by the dashed dotted arrows, the left detail shows a connecting body 110 alone, and the right detail shows a pipe retaining assembly alone.

The illustrated pipe coupling 100 comprises a first connector body 110a and a second connector body 110b arranged opposite of the first connector body 110a. Each of the first and second connector bodies 110 is configured to receive a respective pipe end, such as a first pipe end 300a and a second pipe end 300b, respectively. The grey arrows illustrate the movement of the pipe ends 300 when being inserted into the respective connector body 110. As a mere example, each pipe end 300 can be received in the respective connector body 110 until the front face of the pipe end 300 abuts against a part 119 of the connector body 110. This part 119 forming an abutting surface for the pipe end 300 can be a portion of an inner seal receiving section 118.

It is to be understood that the free cross-section of the part 119 (the inner opening of this part 119) should be at least the size of the cross-section of the lumen of the pipe 300, in order to not obstruct the flow of fluid from one pipe end 300a to the other pipe end 300b.

In any case, there can be one or more inner seal receiving sections 116, 118 configured to receive a respective sealing 186, 188. Each of the sealings 186, 188 seals and outer surface of the pipe end 300 with respect to an inner surface of the connector body 110. Thus, once the pipe end 300 is inserted, the connector body 110 is positioned on the pipe end 300 in a fluid tight manner.

In order to hold the pipe end 300 in the connector body 110, at least one pipe retaining assembly 200 can be provided. The pipe retaining assembly 200 can comprise a claw 218 pinching an outer surface of the respective first or second pipe end 300. The pipe retaining assembly 200 can have a ring-shaped body 210 having an inner side, where the claw 218 is arranged and faces inwardly.

The ring-shaped body 210 can further comprises a latch or ear 212 facing outwardly, i.e. towards an inner surface of the connector body 110, which has a corresponding recess 112, into which the latch or ear 212 can hook. As a mere example, the pipe retaining assembly 200 can be placed over the pipe end 300 (or the pipe end 300 is inserted into the pipe retaining assembly 200), which are then inserted together into the interior space of the connector body 110. Once the latch or ear 212 hooks into the recess to 112, the pipe end 300 cannot be pulled out of the connector body 110 as the claw pinches into the outer surface of the pipe 300. It is to be understood, that the pipe retaining assembly 200 can first be inserted into the connector body 110, and the pipe end 300 is inserted thereafter. Moreover, an interior end of the ring-shaped body 210 can form a part of the seal receiving section 116, i.e. the interior and can abut against the seal 186.

In order to release the pipe end 300 from the connector body 110, the pipe retaining assembly 200 can further comprise an unlocking ring 250 having an inclined front face 258 configured to press the claw 218 out of the pinching engagement with the respective first or second pipe end 300, when the unlocking ring 250 is moved along the respective pipe 300. In other words, the claw 218 is bent outwardly, so that the pipe 300 can glide inside of the unlocking ring 250, when being pulled out of the connector body 110.

The ring-shaped body 210 of the pipe retaining assembly 200 can be squeezed together, if the pipe end 300 is not present therein, so that the latch or ear 212 can be unhooked, brought out of the recess 212.

The first connector body 110a and the first pipe end 300a received therein extend in a first longitudinal direction, and the second connector body 110b and the first pipe end 300b received therein extend in a second longitudinal direction. In Figure 1 both longitudinal directions are coinciding and are illustrated as a single dashed dotted line.

The first connector body 110a can comprise at an outer circumference a seal receiving section 113. Such seal receiving section 113 can include one or more protrusions forming a recess 114, or a circumferential recess 114 in the outer surface of the first connector body 110a forms the seal receiving section 113. A first outer seal 184a is arranged partially in the seal receiving section 113 and seals a space between the first connector body 110a and an outer clamp assembly 150.

Specifically, the pipe coupling 100 further comprises the outer clamp assembly 150 having an inner surface extending in a third longitudinal direction and delimiting an interior space configured to receive the seal receiving section 113 of the first connector body 110a. The outer clamp assembly 150 can be configured to be widened in a circumferential direction to allow insertion of the seal receiving section 113 of the first connector body 110a. Figure 1 illustrates the outer clamp assembly 150 in the non-widened state, where it closely surrounds the first and second connector bodies 110.

The outer clamp assembly 150 further has a first and second flange 152 each extending radially inwardly from the inner surface of the outer clamp assembly 150. Such flanges 152 further delimit the inner space of the outer clamp assembly 150.

A first outer seal 184a is arranged partially in the seal receiving section 113 of the first connector body 110a and seals a space between the first connector body 110a and the outer clamp assembly 150. As a mere example, the outer clamp assembly 150 can comprise a clamp sleeve 160 covering the interior surface of the outer clamp assembly 150 and forming a sealing surface for the first outer seal 184a. Such clamp sleeve 160 may be a circumferentially continuous body or may also be configured to be widened as the remainder of the outer clamp assembly 150. The first outer seal 184a can achieve a fluid tight coupling with the clamp sleeve 160 (or alternatively with the inner surface of the outer clamp assembly 150, if no clamp sleeve 160 is present).

Since in Figure 1 the first and second connector bodies 110 are identically shaped, but arranged in a symmetric manner, all details described with respect to the first connector body 110a also apply to the second connector body 110b. The description thereof is omitted for sake of brevity.

In any case, the lumen of the first and second pipe ends 300 are fluidly connected by the pipe coupling, and are further fluid tight with respect to the exterior of the pipe coupling 100 due to the outer seals 184, and further due to the inner seals 186, 188 arranged in the inner seal receiving sections 116, 118.

In order to avoid or at least reduce particles to enter the interior space of the outer clamp assembly 150, a hygienic seal 190 can be provided inside of the outer clamp assembly 150 and between the first and second connector bodies 110. It is advantageous, if an inner diameter of the hygienic seal 190 is equal to or larger than an inner diameter of the pipe ends 300, in order to not hinder the free flow of fluid from one pipe 300 to another.

Furthermore and as schematically illustrated in Figure 1, the first and second flanges 152 of the outer clamp assembly 150 are spaced apart from one another in the third longitudinal direction by a distance larger than an extent of the seal receiving section 113 of the first connector body 110a in the first longitudinal direction. Actually, the distance between the first and second flanges 152 is larger than a sum of the extent of the seal receiving section 113 of the first connector body 110a and an extent of the seal receiving section 113 of the second connector body 110b.

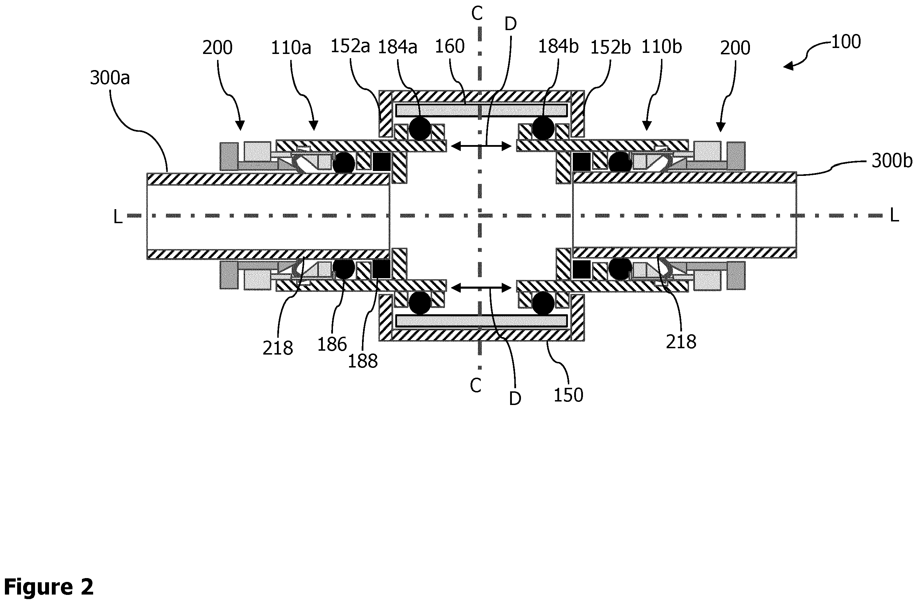

This is further explained with respect to Figure 2, which illustrates the pipe coupling 100 of Figure 1 having each pipe end 300 inserted into the respective connector body 110. For sake of brevity, some of the reference numerals have been omitted.

Specifically, due to the distance between the first and second flanges 152, the first and/or second connector body 110 can move along the third longitudinal direction. In the illustrated example of Figures 1 and 2, the first, second and third longitudinal directions coincide and are, hence, illustrated as a single longitudinal direction "L". The first and/or second connector bodies 110, hence, can move along the first, second and/or third longitudinal directions.

This movement and the distance D that one or both of the connector bodies 110 can move is illustrated by double arrows in Figure 2. Thus, while the pipe ends 300 are fixedly held inside of the respective connector bodies 110 by the claw 218, the pipe ends 300 can move in the pipe coupling 100 together with the respective connector body 110. As a mere example, a thermal expansion of one or both of the pipes 300 or a movement of the pipes 300 due to a movement of the structure, to which the pipes 300 are mounted, can be compensated by the outer clamp assembly 150 having the first and second flanges 152 spaced apart in the described manner.

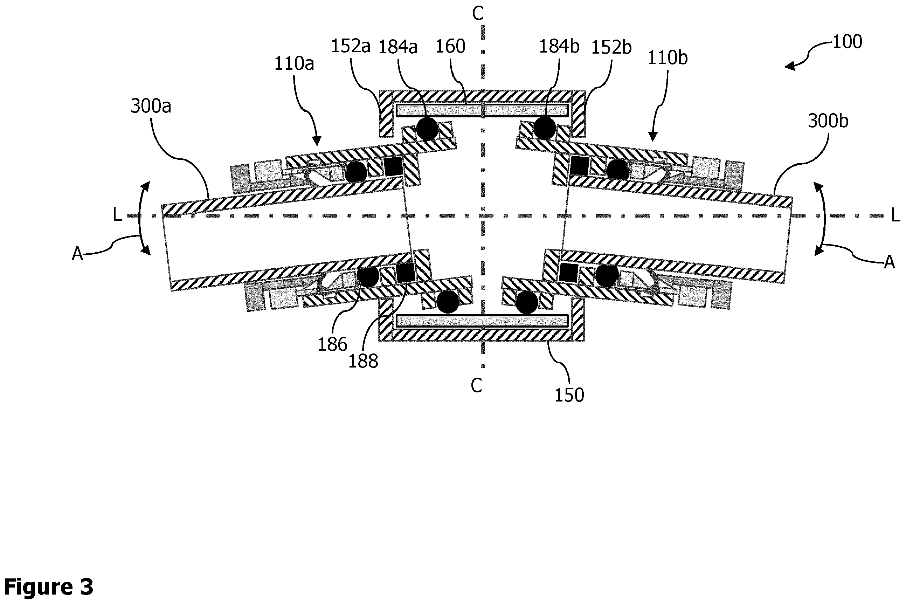

Moreover, with respect to Figure 3, an inner surface of the first flange 152a is spaced apart, in a radial direction, from an outer surface of the first connector body 110a arranged adjacent to the seal receiving section 113 of the first connector body 110a. In other words, when viewing in the radial direction (perpendicular to the longitudinal directions L) there is a gap between an inner surface of the first flange 152a and an outer surface of the first connector body 110a. In the symmetric arrangement of Figures 1 to 3, the same applies to the second flange 152b and outer surface of the second connector body 110b.

This radial gap allows an angular movement of one of or both first and second connector bodies 110 as well as the first and second pipes 300. The angular movement is illustrated in Figure 3 by curved double arrows indicated as "A". The extent of the singular movement is limited by the inner diameter of the first and second flanges 152 and/or the outer diameter of the outer surface of the first and second connector bodies 110. While the outer seals 184 can move along the inner surface of the outer clamp assembly 150 or the clamp sleeve 160 and continuously achieve a sealing, the outer surface of the first and/or second connector body 110 will abut against the inner surface of the first and/or second flange 152.

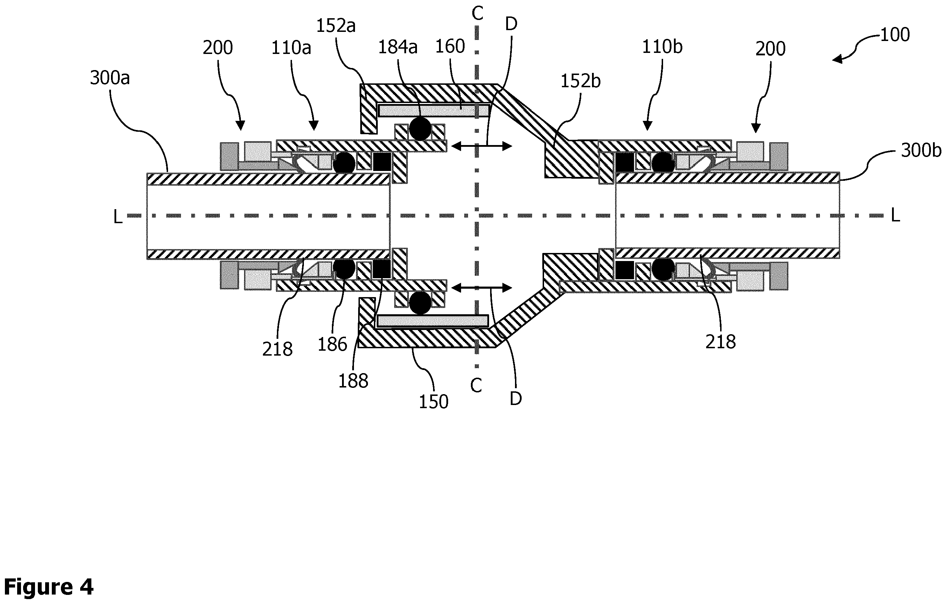

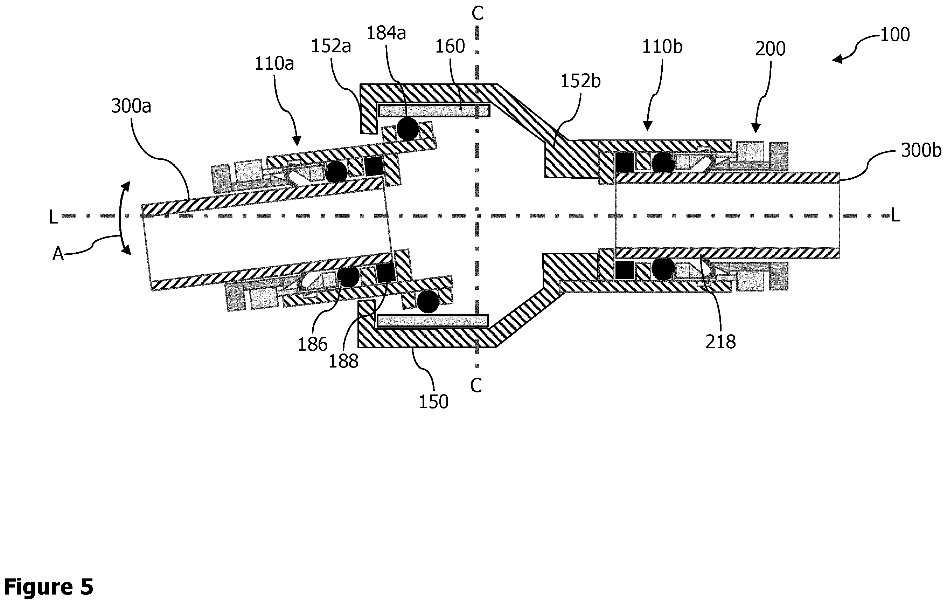

Figures 4 and 5 schematically illustrate another exemplary pipe coupling 100 and relative movements of the components thereof. A majority of the components of the pipe coupling 100 is similar or even identical to those of the pipe coupling 100 of Figures 1 to 3. These similar or identical components are provided with the same reference numerals and the description thereof is omitted for sake of brevity of the present disclosure.

The difference between both pipe couplings 100 is the omission of the second outer seal 184, and seal receiving section 113 of the second connector body 110b in the example of Figures 4 and 5. Instead, the outer clamp assembly 150 in this exemplary pipe coupling 100 is mounted to or integrated into the second connector body 110b and extends in the second longitudinal direction. As there is no separate outer clamp assembly 150, the third longitudinal direction of Figures 1 to 3 coincides with the second longitudinal direction of the second connector body 110b. The outer clamp assembly 150 extends away from a section of the second connector body 110b receiving the second pipe end 300b.

Furthermore, the integrated outer clamp assembly 150 also has a first flange 152a providing the same functions by having the same relative dimensions/sizes as in the pipe coupling 100 of Figures 1 to 3. The second flange 152b can likewise be found in form of a side of the integrated outer clamp assembly 150 were the remainder of the second connector body 110b is provided. Figures 4 and 5 exemplarily illustrate a slant or inclined portion of the outer clamp assembly 150. It is to be understood that instead of such slant or inclined portion, a radially arranged second flange 152 connected at its interior side with the remainder of the second connector body 110b can be provided.

Thus, the first and second flanges 152 (or portions) of the outer clamp assembly 150 are spaced apart from one another in the third/second longitudinal direction by a distance larger than an extent of the seal receiving section 113 of the first connector body 110a in the first longitudinal direction.

In this exemplary pipe coupling 100, the first connector body 110a and, hence, the first pipe end 300a can move linearly (along the first longitudinal direction L) and can further perform an angular movement A relative to the integrated outer clamp assembly 150. Thus, a compensation of such movements can still be achieved by the exemplary pipe coupling 100, while the number of components can be reduced.

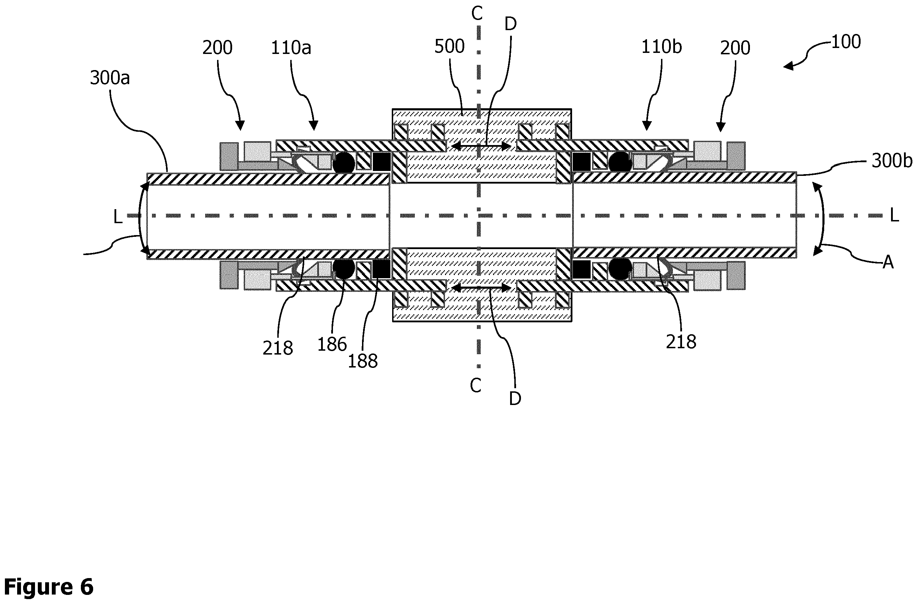

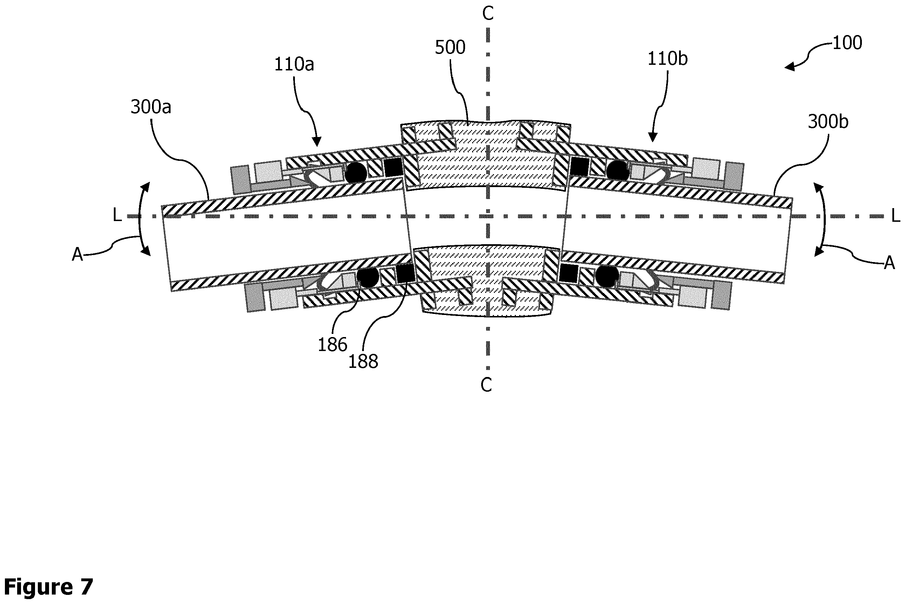

Figures 6 and 7 schematically illustrate another exemplary pipe coupling 100 and relative movements of the components thereof, not forming part of the invention as claimed, but help to better understand the invention. A majority of the components of the pipe coupling 100 is similar or even identical to those of the pipe coupling 100 of Figures 1 to 3. These similar or identical components are provided with the same reference numerals and the description thereof is omitted for sake of brevity of the present disclosure.

The difference between the pipe coupling 100, according to Figures 1 to 3, and the pipe coupling 100 of Figures 6 and 7 is that the outer clamp assembly 150 is substitute for a flexible coupling 500. This further allows omitting the second outer seals 184 and does not require a clamp sleeve 160. The flexible coupling 500, e.g., made from a rubber, rubbery material or any other flexible and fluid tight material (even under pressure), can bend, squeeze and stretch, in order to allow linear movement (along the first longitudinal direction L) as well as the angular movement "A" of the first and second connector bodies 110 relative to one another. This simplifies the structure of the pipe coupling 100.

Although illustrated with a seal receiving section 113 in Figures 6 and 7, the first and second connector bodies 110 can be made without it. However, any such protrusion can help fixation of the flexible coupling 500 on the first and second connector bodies 110, respectively.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

## Claims

1. A pipe coupling (100), comprising:
a first connector body (110a) configured to receive a first pipe end (300a) therein and extending in a first longitudinal direction, the first connector body (110a) comprising at an outer circumference a seal receiving section (113);
a second connector body (110b) configured to receive a second pipe end (300b) therein and extending in a second longitudinal direction;
an outer clamp assembly (150) having an inner surface extending in a third longitudinal direction and delimiting an interior space configured to receive the seal receiving section (113) of the first connector body (110a), wherein the outer clamp assembly (150) further has a first and second flange (152) each extending radially inwardly from the inner surface; and
a first outer seal (184a) arranged partially in the seal receiving section (113) of the first connector body (110a) and sealing a space between the first connector body (110a) and the outer clamp assembly (150),
wherein the first and second flange (152) of the outer clamp assembly (150) are spaced apart from one another in the third longitudinal direction by a distance larger than an extent of the seal receiving section (113) of the first connector body (110a) in the first longitudinal direction, and
wherein an inner surface of the first flange (152a) is spaced apart, in a radial direction, from an outer surface of the first connector body (110a) arranged adjacent to the seal receiving section (113) of the first connector body (110a).

2. The pipe coupling (100) of claim 1, wherein the second connector body (110b) comprises at an outer circumference a seal receiving section (113), and wherein the pipe coupling (100) further comprises:
a second outer seal (184b) arranged partially in the seal receiving section (113) of the second connector body (110b) and sealing a space between the second connector body (110b) and the outer clamp assembly (150),
wherein the distance between the first and second flange (152) is larger than a sum of the extent of the seal receiving section (113) of the first connector body (110a) and an extent of the seal receiving section (113) of the second connector body (110b), and
wherein an inner surface of the second flange (152b) is spaced apart, in a radial direction, from an outer surface of the second connector body (110b) arranged adjacent to the seal receiving section (113) of the second connector body (110b).

3. The pipe coupling (100) of claim 2, further comprising:
a clamp sleeve (160) covering the interior surface of the outer clamp assembly (150) and forming a sealing surface for the first and second outer seals (184).

4. The pipe coupling (100) of claim 1, wherein the outer clamp assembly (150) is mounted to or integrated into the second connector body (110b) and extends in the second longitudinal direction, being the third longitudinal direction, away from a section of the second connector body (110b) receiving the second pipe end (300b).

5. The pipe coupling (100) of one of claims 1 to 4, further comprising:
at least one sealing (186, 188) provided at respective inner seal receiving sections (116, 118) of one of the first and second connector body (110).

6. The pipe coupling (100) of one of claims 1 to 5, wherein the outer clamp assembly (150) is configured to be widened in a circumferential direction to allow insertion of the seal receiving section (113) of the first connector body (110a).

7. The pipe coupling (100) of one of claims 1 to 6, further comprising:
at least one pipe retaining assembly (200) configured to be inserted into one of the first connector body (110a) and the second connector body (110b) from an end opposite to the respective seal receiving section (113),
wherein the at least one pipe retaining assembly (200) comprises a claw (218) pinching an outer surface of the respective first or second pipe end (300).

8. The pipe coupling (100) of claim 7, further comprising:
an unlocking ring (250) having an inclined front face (258) configured to press the claw (218) out of the pinching engagement with the respective first or second pipe end (300), when the unlocking ring (250) is moved along the respective first or second longitudinal direction.
